# EUROPEAN PATENT APPLICATION

(11) **EP 3 057 263 A1**
(43) Date of publication of application: **17.08.2016**
(21) Application number: 14800315.5
(22) Date of filing: 28.05.2014
(51) Int. Cl.: H04L 12/18

(54) **MULTICAST MESSAGE RESPONSE METHOD AND DEVICE**

(30) Priority: 08.10.2013 CN 201310466157
(71) Applicant: ZTE Corporation, Shenzhen, Guangdong 518057 (CN)
(72) Inventor: WANG, Yong, Shenzhen Guangdong 518057 (CN)
(74) Representative: Mozzi, Matteo
(86) International application number: PCT/CN2014/078687
(87) International publication number: WO 2014/187380

(57) **Abstract**

Provided are a method and apparatus for responding to a multicast message. According to the method, a multicast message is obtained, and maximum response time of the multicast message is obtained according to the multicast message; and a response message of each multicast channel among a plurality of multicast channels is evenly sent at least according to the maximum response time, wherein the plurality of multicast channels are multicast channels, each of which has a response message to be sent in response to the multicast message. By means of the solution, the problems of aging of multicast entries and interruption of channel code streams caused by the fact that a large number of Internet Group Management Protocol (IGMP) multicast response messages bursting within a short time possibly go beyond an IGMP message processing ability of a switch are solved, and the reliability and stability of a system are improved.

## Description

### Technical Field

The present disclosure relates to the field of communications, and in particular to a method and apparatus for responding to a multicast message.

### Background

Compared with a unicast technology, a multicast technology has an advantage that a network bandwidth is not linearly increased along with the number of users on the basis of equality in transmission efficiency, and therefore loads on an Internet Protocol Television (IPTV) media server and an IPTV bearer network can be effectively alleviated. Consequently, in order to deploy IPTV services efficiently and economically, the multicast technology is frequently adopted to perform end-to-end media stream pushing.

An IPTV node has a plurality of media ports connected to a switch device and is used for receiving program code streams and providing live broadcast services outwards. When a multicast channel is created, the node will send an Internet Group Management Protocol (IGMP) joining request to the switch device at a network port where the channel is located, then the switch device forms a multicast entry (s,g), and then a multicast code stream will be sent to the network port at which the request is sent. The multicast entry has aging time, the switch device broadcasts an IGMP multicast query message regularly (at a default interval of 125s), a timer is set to wait for a response (the time is default maximum response time of 10s for a query), an IPTV network port sends a multicast report after receiving the IGMP multicast query message, and the switch device will update the aging time corresponding to the multicast entry after receiving the multicast report. If the multicast report is not received within the maximum response time, the switch device will consider that the node does not respond to this query. If an IGMP report has not been received finally, the multicast entry will be deleted when the aging time expires.

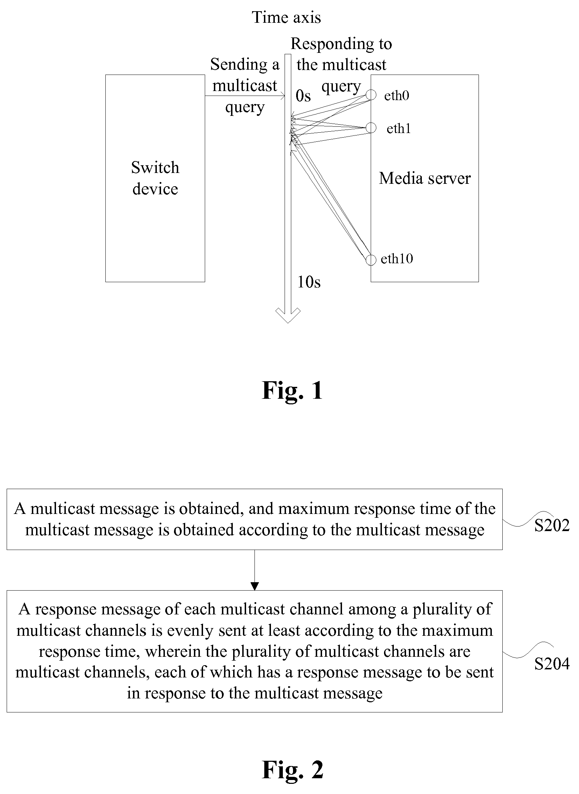

Fig. 1 is a schematic diagram showing the process that an IPTV node responses to a multicast query message according to the relevant art. As shown in Fig. 1, if the IPTV node has 10 network ports connected to the switch device, and each network port is provided with 100 multicast channels, then the multicast channels of each network port probably give multicast responses to the switch device after receiving the IGMP multicast query message, wherein the multicast channels can give IGMP response messages to the switch device within the range of the maximum response time, i.e., the multicast channels can give IGMP response messages to the switch device as long as the requirement of the IGMP maximum response time is met.

It is discovered, by an inventor of the present disclosure in a research process, that there is not a unified and reasonable scheduling mechanism in the same network port or among different network ports when multicast channels respond to a multicast message in the relevant art. Thus, in the presence of a large number of multicast channels (similar to the case that a plurality of terminals receiving multicast code streams are connected to the switch), since all the multicast channels are not aware of each other, if IGMP responses are randomly given to the switch, a large number of multicast channels may suddenly give IGMP responses to the switch together within a short time when these multicast channels have similar response performance in responding to the multicast message, then the switch device may receive thousands of IGMP reports within a short time, which will go far beyond the ability of the switch device to process multicast protocol messages, as a consequence, messages of some multicast reports may be discarded, such that the corresponding multicast entries are aged and the switch device will not push code streams to these multicast channels.

Thus, it can be concluded that the situations of aging of the multicast entries and interruption of the channel code streams may be caused by the fact that a large number of IGMP multicast response messages bursting within a short time possibly go beyond an IGMP message processing ability of the switch.

An effective solution has not been proposed currently for the problems in the relevant art of aging of the multicast entries and interruption of the channel code streams caused by the fact that a large number of IGMP multicast response messages bursting within a short time possibly go beyond the IGMP message processing ability of the switch.

### Summary

The embodiments of the present disclosure provide a method and apparatus for responding to a multicast message, which are intended to at least solve the problems of aging of multicast entries and interruption of channel code streams caused by the fact that a large number of IGMP multicast response messages bursting within a short time possibly go beyond an IGMP message processing ability of a switch.

According to one aspect of the embodiments of the present disclosure, a method for responding to a multicast message is provided, which may include that: a multicast message is obtained, and maximum response time of the multicast message is obtained according to the multicast message; and a response message of each multicast channel among a plurality of multicast channels is evenly sent at least according to the maximum response time, wherein the plurality of multicast channels are multicast channels, each of which has a response message to be sent in response to the multicast message.

In an example embodiment, the plurality of multicast channels may be multicast channels corresponding to a same network port in a media server.

In an example embodiment, the step that the response message of each multicast channel is evenly sent at least according to the maximum response time may include that: a sending interval between response messages which are sent successively is determined according to the maximum response time and the number of the plurality of multicast channels; and response messages of the plurality of multicast channels are sent according to the sending interval.

In an example embodiment, the step that the response message of each multicast channel is evenly sent at least according to the maximum response time may include that: total time for responding to the multicast message is divided into a preset number of time segments according to the maximum response time and the number of the plurality of multicast channels; and at least one response message of at least one multicast channel among the plurality of multicast channels is sent in a respective time segment of the preset number of time segments.

In an example embodiment, the step that at least one response message of at least one multicast channel among the plurality of multicast channels is sent in a respective time segment of the preset number of time segments may include that: response messages are sent in sequence according to a time sequence that each of the plurality of multicast channels responds to the multicast message, wherein a response message corresponding to a multicast channel which responds to the multicast message earlier is sent preferentially.

In an example embodiment, the number of the at least one response message sent in each time segment may be smaller than or equal to a preset value, wherein the preset value is determined according to an ability of a receiving end in processing response messages.

In an example embodiment, the step that the response message of each multicast channel is evenly sent at least according to the maximum response time may include that: time at which each multicast channel is to send a corresponding response message is mapped, by using a preset algorithm according to the maximum response time and information of the multicast channels, into total time for responding to the multicast message, so as to obtain time for sending the response message by each multicast channel; and the response message of each multicast channel is sent according to the time respectively.

According to another aspect of the embodiments of the present disclosure, an apparatus for responding to a multicast message is provided, which may include: an obtaining component, configured to obtain a multicast message, and obtain maximum response time of the multicast message according to the multicast message; and a sending component, configured to evenly send a response message of each multicast channel among a plurality of multicast channels at least according to the maximum response time, wherein the plurality of multicast channels are multicast channels, each of which has a response message to be sent in response to the multicast message.

In an example embodiment, the sending component may include: a determination element, configured to determine, according to the maximum response time and the number of the plurality of multicast channels, a sending interval between response messages which are sent successively; and a first sending element, configured to send response messages of the plurality of multicast channels according to the sending interval.

In an example embodiment, the sending component may include: a division element, configured to divide total time for responding to the multicast message into a preset number of time segments according to the maximum response time and the number of the plurality of multicast channels; and a second sending element, configured to send at least one response message of at least one multicast channel among the plurality of multicast channels in a respective time segment of the preset number of time segments.

In an example embodiment, the sending component may include: a mapping element, configured to map, by using a preset algorithm according to the maximum response time and information of the plurality of multicast channels, time at which each multicast channel is to send a corresponding response message into total time for responding to the multicast message, so as to obtain time for sending the response message by each multicast channel; and a third sending element, configured to send the response message of each multicast channel according to the time respectively.

By means of the embodiments of the present disclosure, the multicast message is obtained, and the maximum response time of the multicast message is obtained according to the multicast message; and the response message of each of the multicast channels is evenly sent at least according to the maximum response time, wherein the multicast channels are the multicast channels waiting for responding to the multicast message. In this way, the problems of aging of the multicast entries and interruption of the channel code streams caused by the fact that a large number of IGMP multicast response messages bursting within a short time possibly go beyond the IGMP message processing ability of the switch are solved, and the reliability and stability of a system are improved.

### Brief Description of the Drawings

The drawings described here are intended to provide further understanding of the present disclosure, and form a part of the present disclosure. The schematic embodiments and descriptions of the present disclosure are intended to explain the present disclosure, and do not form improper limits to the present disclosure. In the drawings:
Fig. 1 is a schematic diagram showing the process that an IPTV node responses to a multicast query message according to the relevant art;
Fig. 2 is a schematic diagram showing the flow of a method for responding to a multicast message according to an embodiment of the present disclosure;
Fig. 3 is a schematic diagram showing the structure of an apparatus for responding to a multicast message according to an embodiment of the present disclosure;
Fig. 4 is a schematic diagram showing a first example structure of an apparatus for responding to a multicast message according to an embodiment of the present disclosure;
Fig. 5 is a schematic diagram showing a second example structure of an apparatus for responding to a multicast message according to an embodiment of the present disclosure;
Fig. 6 is a schematic diagram showing the process that a media server responds to a multicast query message according to an example embodiment of the present disclosure; and
Fig. 7 is a schematic diagram showing the flow of a method for controlling a multicast report sending rate according to an example embodiment of the present disclosure.

### Detailed Description of the Embodiments

It is important to note that the embodiments of the present disclosure and the characteristics in the embodiments can be combined under the condition of no conflicts. The present disclosure is described below with reference to the drawings and the embodiments in detail.

The steps shown in the flow diagram of the drawings can be executed in a computer system containing, for example, a set of computer executable instructions. Moreover, although a logical sequence is shown in the flow diagram, the shown or described steps can be executed in a sequence different from this sequence under certain conditions.

The embodiment provides a method for responding to a multicast message. Fig. 2 is a schematic diagram showing the flow of a method for responding to a multicast message according to an embodiment of the present disclosure. As shown in Fig. 2, the flow includes the steps as follows.

Step S202: A multicast message is obtained, and maximum response time of the multicast message is obtained according to the multicast message.

Step S204: A response message of each multicast channel among a plurality of multicast channels is evenly sent at least according to the maximum response time, wherein the plurality of multicast channels are multicast channels, each of which has a response message to be sent in response to the multicast message.

By means of the steps, a mode of evenly sending the response messages via the multicast channels within the time for responding to the multicast message, indicated by the maximum response time, is adopted. Compared with a mode of determining time for responding to the multicast message according to response time of the multicast channels during sending of the response messages in the relevant art, the embodiment actively plans the sending of the response messages, responding to the multicast message, of the multicast channels so as to linearly and evenly send the response messages, the problems of aging of the multicast entries and interruption of the channel code streams caused by the fact that a large number of IGMP multicast response messages bursting within a short time possibly go beyond the IGMP message processing ability of the switch are solved, and the reliability and stability of the system are improved.

In an example embodiment, the plurality of multicast channels may be multicast channels corresponding to the same network port, such as a network port 0 (eth0) in Fig. 1, in a media server. In an example embodiment, each of the other network ports achieves even sending of the response messages by means of the method provided in the embodiment.

In an example embodiment, Step S204 may include that: a sending interval between response messages which are sent successively is determined according to the maximum response time and the number of the plurality of multicast channels; and response messages of the plurality of multicast channels are sent according to the sending interval. In the mode, by setting the sending interval between the successive response messages, all the response messages can be evenly sent within the response time in sequence. In an example embodiment, a plurality of response messages may be sent at the same time, and a sending interval between these response messages and a plurality of response messages which are sent next time can be determined according to the maximum response time and the number of the plurality of multicast channels.

In an example embodiment, the sending interval corresponding to each network port may be set in a unified manner, or may be set separately.

In an example embodiment, Step S204 includes that: total time for responding to the multicast message is divided into a preset number of time segments according to the maximum response time and the number of the plurality of multicast channels; and at least one response message of at least one multicast channel among the plurality of multicast channels is sent in a respective time segment of the preset number of time segments. In the mode, a mode of segmentally planning the total time for responding to the multicast message is provided, such that one or more response messages of one or more multicast channels may be sent in each of the time segments, in this way, the response messages can be sent linearly and evenly.

The total time for responding to the multicast message may refer to a time segment indicated by the maximum response time. In an example embodiment, the total time for responding to the multicast message may not include response time at which one or more multicast channels respond to the multicast message in the time segment indicated by the maximum response time.

In an example embodiment, under the condition that at least one response message of at least one multicast channel among the plurality of multicast channels is sent in a respective time segment of the preset number of time segments, the response messages can be sent in sequence according to a time sequence that each of the plurality of multicast channels responds to the multicast message. In an example embodiment, a response message corresponding to a multicast channel which responds to the multicast message earlier is sent preferentially. For example, the response messages of the multicast message may be sent by means of queues. Namely, all the response messages are added to one or more queues according to their respective generation time, de-queued according to a preset time interval (corresponding to the preset number of divided time segments) respectively, and sent to a receiving end finally.

In an example embodiment, in order to guarantee the processing performance of the receiving end, the maximum number of the response messages sent in the same time segment can be set, a preset value is used for representing the maximum number of the response messages sent in the same time segment, and the preset value is determined according to an ability of the receiving end in processing response messages.

In an example embodiment, Step S204 may include that: time at which each multicast channel is to send the corresponding response message is mapped into the total time for responding to the multicast message by using a preset algorithm according to the maximum response time and information of the plurality of multicast channels, so as to obtain time for sending the response message by each multicast channel; and the response message of each multicast channel is sent according to the time respectively. In this mode, the time at which each multicast channel sends the corresponding response message is mapped into the total time capable of responding to the multicast message, so as to plan the time at which each multicast channel sends the corresponding response message, such that the time at which each multicast channel sends the corresponding response message is relatively determined within the total time for responding to the multicast message, indicated by the maximum response time, and therefore the response messages can be sent linearly and evenly.

In an example embodiment, the information of the plurality of multicast channels includes identification information of each multicast channel. In an example embodiment, the preset algorithm may include a hash algorithm.

The embodiment also provides an apparatus for responding to a multicast message. The apparatus is configured to implement the method for responding to a multicast message. A specific implementation process of the apparatus described in the apparatus embodiment has been described in detail in the method embodiment, and is not repeated here.

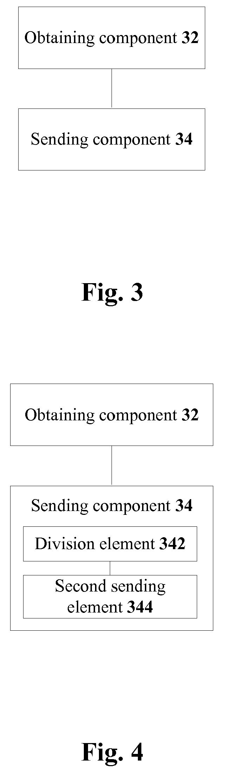

Fig. 3 is a schematic diagram showing the structure of an apparatus for responding to a multicast message according to an embodiment of the present disclosure. As shown in Fig. 3, the apparatus may include: an obtaining component 32 and a sending component 34, wherein the obtaining component 32 is configured to obtain a multicast message, and obtain maximum response time of the multicast message according to the multicast message; and the sending component 34 is coupled to the obtaining component 32 and is configured to linearly and evenly send a response message of each multicast channel among a plurality of multicast channels at least according to the maximum response time, wherein the multiple multicast channels are multicast channels which have responding messages to be sent in response to the multicast message.

The components and elements involved in the embodiment of the present disclosure may be implemented in a software mode or a hardware mode. The components and the elements described in the embodiment may be arranged in a processor. For example, it can be described as: a processor includes an obtaining component 32 and a sending component 34. It should be noted that names of these components do not form limits to these components under certain conditions. For example, the obtaining component can be described as "a component configured to obtain a multicast message and obtain maximum response time of the multicast message according to the multicast message".

In an example embodiment, the plurality of multicast channels are multicast channels corresponding to a same network port in a media server.

In an example embodiment, the sending component 34 includes: a determination element, configured to determine, according to the maximum response time and the number of the plurality of multicast channels, a sending interval between response messages which are sent successively; and a first sending element, coupled to the determination element and configured to send response messages of the plurality of multicast channels according to the sending interval.

Fig. 4 is a schematic diagram showing a first example structure of an apparatus for responding to a multicast message according to an embodiment of the present disclosure. As shown in Fig. 4, in an example embodiment, the sending component 34 includes: a division element 342, configured to divide total time for responding to the multicast message into a preset number of time segments according to the maximum response time and the number of the plurality of multicast channels; and a second sending element 344, coupled to the division element 342 and configured to send at least one response message of at least one multicast channel among the plurality of multicast channels in a respective time segment of the preset number of time segments.

In an example embodiment, the second sending element 344 is configured to send response messages in sequence according to a time sequence that each of the plurality of multicast channels responds to the multicast message under the condition that at least one response message of at least one multicast channel among the plurality of multicast channels is sent in a respective time segment of the preset number of time segments, wherein a response message corresponding to a multicast channel which responds to the multicast message earlier is sent preferentially.

In an example embodiment, the number of the at least one response message sent in the same time segment is smaller than or equal to a preset value, wherein the preset value is determined according to an ability of a receiving end in processing response messages.

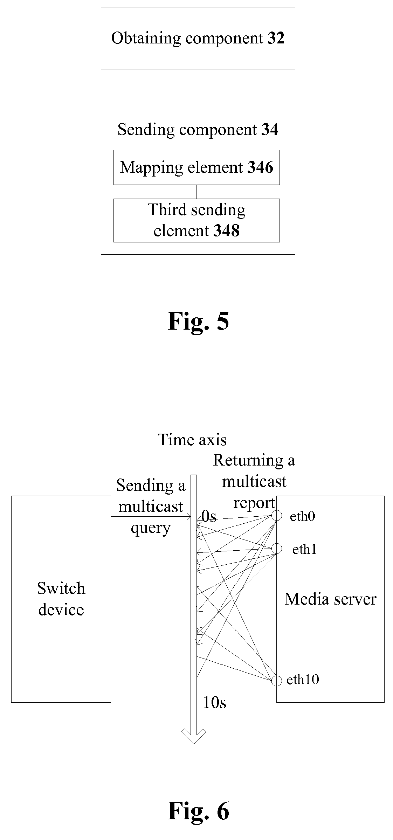

Fig. 5 is a schematic diagram showing a second example structure of an apparatus for responding to a multicast message according to an embodiment of the present disclosure. As shown in Fig. 5, in an example embodiment, the sending component 34 includes: a mapping element 346, configured to map, by using a preset algorithm according to the maximum response time and information of the multicast channels, time at which each multicast channel is to send the corresponding response message into the total time for responding to the multicast message, so as to obtain time for sending the response message by each multicast channel; and a third sending element 348, coupled to the mapping element 346 and configured to send the response message of each multicast channel according to the time respectively.

In an example embodiment, the information of the plurality of multicast channels may include identification information of each multicast channel. The preset algorithm may include a hash algorithm.

Descriptions and explanations are made below with reference to an example embodiment.

The example embodiment provides a method and system for controlling a multicast report message sending rate in an IPTV system, which can be used for controlling a sending rate of a large number of multicast report messages of an IPTV node under a network environment that processing of multicast reports at a data device is limited.

Fig. 6 is a schematic diagram showing the process that a media server responds to a multicast query message according to an example embodiment of the present disclosure. As shown in Fig. 6, a method for controlling an IPTV multicast report message sending rate at a Content Delivery Network (CDN) side under an environment that an ability of a switch device in processing multicast protocol messages is limited, provided by an example embodiment of the present disclosure, includes the solution as follows.

After a network port of a media server receives a multicast query message, a maximum response time parameter T carried in the message is obtained, and the media server linearly and evenly sends IGMP response messages of various multicast channel in sequence in a unified manner within the maximum response time until all multicast report messages are completely sent.

An implementation process of the example embodiment is further described and explained below.

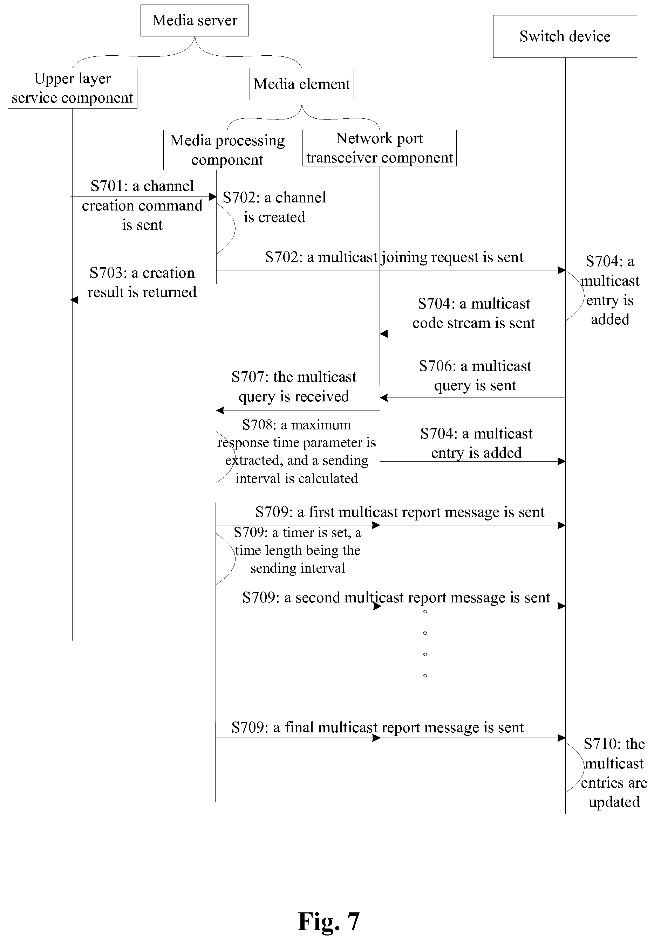

Fig. 7 is a schematic diagram showing the flow of a method for controlling a multicast report sending rate according to an example embodiment of the present disclosure. As shown in Fig. 7, the flow includes the steps as follows.

Step S701: An upper layer service component sends a channel creation command to a media processing component, wherein the channel creation command carries parameters including a channel number, a multicast IP, a media server outer port IP and the like.

Step S702: The media processing component opens a path to create a channel according to the parameters, and sends a multicast joining request to a switch device via a network port transceiver component.

Step S703: The media processing component returns a channel creation result to the service component.

Step S704: The switch device receives a request of a network port to generate a multicast entry, and pushes a code stream to the network port.

Step S705: Steps S701 to S704 are repeated, and a plurality of multicast channels are created.

Step S706: The switch device sends a multicast query to each network port according to a configured period.

Step S707: A network port of a media server receives the multicast query, and sends the multicast query to the media processing component to be processed.

Step S708: The media processing component parses the query message and obtains maximum response time, and the media server linearly and evenly sends IGMP response messages of various multicast channel in sequence within the maximum response time.

Step S709: The media processing component invokes the network port transceiver component to send report messages of all multicast channels in sequence at intervals.

Step S710: The switch device receives multicast reports and updates corresponding multicast entries.

By means of the example embodiment, all multicast reports can be evenly sent within the maximum response time, the switch device side can evenly receive the multicast reports sent by all the network ports, and the situation of discarding caused by the fact that the report messages cannot be processed due to concentrated receiving of the report messages is avoided.

### Industrial Applicability

By means of the embodiments of the present disclosure, a mode of obtaining the multicast message, obtaining the maximum response time of the multicast message according to the multicast message and evenly sending the response message of each of the multicast channels at least according to the maximum response time is adopted, wherein the plurality of multicast channels are the multicast channels waiting for responding to the multicast message. Thus, the problems of aging of the multicast entries and interruption of the channel code streams caused by the fact that a large number of IGMP multicast response messages bursting within a short time possibly go beyond the IGMP message processing ability of the switch are solved, and the reliability and stability of the system are improved.

Obviously, those skilled in the art should understand that all components or all steps in the present disclosure can be realized by using a generic computation apparatus, can be centralized on a single computation apparatus or can be distributed on a network composed of a plurality of computation apparatuses. Optionally, they can be realized by using executable program codes of the computation apparatuses. Thus, they can be stored in a storage apparatus and executed by the computation apparatuses, or they are manufactured into each integrated circuit component respectively, or a plurality of components or steps therein are manufactured into a single integrated circuit component. Thus, the present disclosure is not limited to a combination of any specific hardware and software.

The above is only the example embodiments of the present disclosure, and is not intended to limit the present disclosure. There can be various modifications and variations in the present disclosure for those skilled in the art. Any modifications, equivalent replacements, improvements and the like within the principle of the present disclosure shall fall within the protection scope defined by the appended claims of the present disclosure.

## Claims

1. A method for responding to a multicast message, comprising:
obtaining a multicast message, and obtaining maximum response time of the multicast message according to the multicast message; and
evenly sending a response message of each multicast channel among a plurality of multicast channels at least according to the maximum response time, wherein the plurality of multicast channels are multicast channels, each of which has a response message to be sent in response to the multicast message.

2. The method as claimed in claim 1, wherein the plurality of multicast channels are multicast channels corresponding to a same network port in a media server.

3. The method as claimed in claim 1 or 2, wherein evenly sending the response message of each multicast channel at least according to the maximum response time comprises:
determining, according to the maximum response time and the number of the plurality of multicast channels, a sending interval between response messages which are sent successively; and
sending response messages of the plurality of multicast channels according to the sending interval.

4. The method as claimed in claim 1 or 2, wherein evenly sending the response message of each multicast channel at least according to the maximum response time comprises:
dividing total time for responding to the multicast message into a preset number of time segments according to the maximum response time and the number of the plurality of multicast channels; and
sending at least one response message of at least one multicast channel among the plurality of multicast channels in a respective time segment of the preset number of time segments.

5. The method as claimed in claim 4, wherein sending at least one response message of at least one multicast channel among the plurality of multicast channels in a respective time segment of the preset number of time segments comprises: sending response messages in sequence according to a time sequence that each of the plurality of multicast channels responds to the multicast message, wherein a response message corresponding to a multicast channel which responds to the multicast message earlier is sent preferentially.

6. The method as claimed in claim 5, wherein the number of the at least one response message sent in each time segment is smaller than or equal to a preset value, wherein the preset value is determined according to an ability of a receiving end in processing response messages.

7. The method as claimed in claim 1 or 2, wherein evenly sending the response message of each multicast channel at least according to the maximum response time comprises:
mapping, by using a preset algorithm according to the maximum response time and information of the plurality of multicast channels, time at which each multicast channel is to send a corresponding response message into total time for responding to the multicast message, so as to obtain time for sending the response message by each multicast channel; and
sending the response message of each multicast channel according to the time respectively.

8. An apparatus for responding to a multicast message, comprising:
an obtaining component, configured to obtain a multicast message, and obtain maximum response time of the multicast message according to the multicast message; and
a sending component, configured to evenly send a response message of each multicast channel among a plurality of multicast channels at least according to the maximum response time, wherein the plurality of multicast channels are multicast channels, each of which has a response message to be sent in response to the multicast message.

9. The apparatus as claimed in claim 8, wherein the sending component comprises:
a determination element, configured to determine, according to the maximum response time and the number of the plurality of multicast channels, a sending interval between response messages which are sent successively; and
a first sending element, configured to send response messages of the plurality of multicast channels according to the sending interval.

10. The apparatus as claimed in claim 8, wherein the sending component comprises:
a division element, configured to divide total time for responding to the multicast message into a preset number of time segments according to the maximum response time and the number of the plurality of multicast channels; and
a second sending element, configured to send at least one response message of at least one multicast channel among the plurality of multicast channels in a respective time segment of the preset number of time segments.

11. The apparatus as claimed in claim 8, wherein the sending component comprises:
a mapping element, configured to map, by using a preset algorithm according to the maximum response time and information of the plurality of multicast channels, time at which each multicast channel is to send a corresponding response message into total time for responding to the multicast message, so as to obtain time for sending the response message by each multicast channel; and
a third sending element, configured to send the response message of each multicast channel according to the time respectively.
